# EUROPEAN PATENT SPECIFICATION

(11) **EP 2 943 073 B1**
(45) Date of publication and mention of the grant of the patent: **08.04.2020**
(21) Application number: 14738243.6
(22) Date of filing: 14.01.2014
(51) Int. Cl.: A23G 3/00, A23G 3/34, A23G 3/36, A23G 3/42, A23G 3/48, A23G 3/52, A23G 3/54

(54) **CHEWY CONFECTIONERY PRODUCT**
ZÄHES SÜSSWARENPRODUKT
PRODUIT DE CONFISERIE TENDRE

(30) Priority: 14.01.2013 US 201361752344 P
(43) Date of publication of application: 18.11.2015
(73) Proprietor: WM. Wrigley Jr. Company, Chicago, IL 60642 (US)
(72) Inventor: SRNAK, Paul, Arlington Heights, Illinois 60005 (US); DESHMUKH, Shefali, Chicago, Illinois 60654 (US)
(74) Representative: Dehns
(86) International application number: PCT/US2014/011516
(87) International publication number: WO 2014/110584

(56) References cited:
- EP-A1- 1 104 652
- WO-A1-2005/065461
- WO-A1-2012/112515
- US-A- 4 601 907
- US-A- 5 527 542
- US-A1- 2003 035 877
- US-A1- 2005 013 923
- US-A1- 2005 089 618
- US-A1- 2006 034 976
- US-A1- 2010 226 904
- US-A1- 2012 164 134

## Description

### Field of the Invention

The present invention relates to chewy confectionery products. More specifically, this invention relates to improved formulations for creating a chewy confectionery product with a low water content (when compared to traditional chewy confectionery products) free of traditional texturizing agents. "Traditional texturizing agents" are defined as gelatin, starch, and egg white (albumin). The chewy confectionery product of the present invention provides a chewy confectionery product similar to chewy confectionery products made with traditional texturizing agents, but with a more desirable chew and processing characteristics. The product of the current invention also appeals to a larger population since the present invention eliminates the need for gelatin and egg white, both animal derived products, while giving similar to products produced using gelatin or egg white.

### Background of the Invention

US4601907 discloses a chewy confection having an outer casing comprising chewing gum base and a sweetener, and a center filling which is an aerated plastic blend containing about 5% to about 20% moisture, and from about 1% to about 15% fat with m.p. above 22°C and about 0.1% to about 10% whipping agent dispersed in a water-soluble, sweet-tasting chewy candy matrix which forms about 55% to about 90% of the blend.

US20100226904 discloses a chewable composition for delivery of dietary supplements and pharmaceutical compounds containing organic compliant binding agent, organic sweetener, and active ingredient.

EP1104652 discloses hydrocolloid confectionery product, wherein the hydrocolloid confectionery product is preferably gelatin-free.

US20050089618 discloses a gelatin-free soft caramel for food products e.g. milk products, including soft caramel base mass containing polysaccharide hydrocolloid, crystalline sweetener phase formed by isomaltulose and noncrystalline sweetener phase.

WO2012112515 discloses confectionery products having multiple flavors and multiple textures. More particularly, the confectionery products are multilayered products comprising a powder interior portion, a chewy confectionery composition portion, and an outer coating.

WO2005065461 discloses a coated confectionery product having a confectionery center; a first coating surrounding the center and comprising a fat; and a second coating surrounding the first coating and comprising a hard shell made from one or more sugars, polyols, high intensity sweeteners and mixtures thereof. The sugar may be selected from the group consisting of sucrose, dextrose, maltose. Optionally a third coating may surround the second coating layer and comprise a film comprising film forming agents.

US5527542 discloses "jelly beans" coated gum arabic and maltitol.

US2012164134 discloses a sugar-free chewable composition for delivering dietary supplements and pharmaceutical compounds.

US2003035877 discloses a chewy candy analogue, method of making, and composite ice confections containing the same.

US2005013923 discloses dried soft aerated confections and methods of their preparation are provided, said confectiones having a water activity of about 0.1 to 0.4 and a glass transition temperature of less than 20° C. The confections comprise sugars, a foaming and a structuring ingredient, preferably each gelatin, and about 5 to 15% softening agent.

US2006034976 discloses dual textured, swirled sugar confectionery products, such as gummy or jelly candies or fruit snacks. Gellable liquid components with substantially different sp. gr. are swirled together to obtain a non-particulated, mousse-like, textured product with a swirled or marbleized appearance. The confections include aerated and non-aerated, gelled components, which are co-deposited into moulds. Traditional chewy confectionery products are typically made with a sweetener and a texturizing agent. Commonly used sweeteners are sucrose and glucose syrup. A fat is also commonly added to such chewy confectionery products to achieve desired chew characteristics. Chewy confectionery products have a cohesive nature under normal room conditions. Chewy confectionary products may further include water, foaming agents, humectants, artificial and natural sweeteners, emulsifiers, flavor enhancers, acids, essential oils, artificial or natural flavorings, colorings, fruit juices, vegetable juices, proteins, and other additives typically used in the production of chewy confectionery products as desired. Often times chewy confectionery products are referred to as chewy candy, toffee, gummies, or taffy.

Traditional chewy confectionery products typically contain gelatin, starch, egg white (albumin), or combinations thereof as the texturizing agent so that they have the chewy texture that is desirable for the products. Gelatin is the most popular of the texturizing agents as it gives the chewy confectionery products a long-lasting cohesive chew; however, there are also several downfalls to using gelatin in confectionery products. Food-grade gelatin is obtained from bovine or porcine raw materials and is thus undesirable to a number of groups who observe certain dietary restrictions. Additionally, since gelatin is a protein it is highly sensitive to temperature and/or acid which may cause it to degrade and even foul.

Egg white, also known as albumin, is also traditionally used as a texturizing agent; however, similarly to gelatin albumin is also an animal product and is thus undesirable to a number of groups who observe certain dietary restrictions. Because egg white is also a protein there are also processing limitations similar to those of gelatin associated with use of egg white as the texturizing agent.

Starches are also traditionally used as texturizing agents; however, they typically have a low gelling tendency and are not as useful alone in creating the ideal chewy texture in a chewy confectionery product. Starches will most often be used in conjunction with gelatin to achieve the desired chewy texture and consistency for a chewy confectionery product.

Typically when starch is used as the texturizing agent water, glucose syrup and the starch are pre-mixed and heated to a desired temperature and then cooked at that temperature until the starch has gelatinized forming a starch gel. Both modified and unmodified starches can act as gelling agents in confectionery applications. Starch is basically long polymers of glucose (a.k.a. dextrose) units that are arranged into discrete, highly organized, semi-crystalline aggregates called "starch granules". These starch polymers within the "granule" are either straight-chain/linear (amylose) or highly branched (amylopectin). Starches vary by source in their amylopectin-to-amylose ratios.

When a starch is gelatinized the crystalline structure of the granules is lost, and the granules begin to swell/take up water/increase in size and increase the viscosity of the aqueous system and fully cook out in the candy-making process to the point where the granules lose integrity/fragment/ rupture. As this cooked starch cools, the solubilized straight-chain amylose polymers re-align tightly to form a gel (a process known as retrogradation). Gelling starches are most often used in jelly-type candies with a firm but tender, sticky and pasty chew, i.e. jelly bean centers, gum drops, orange slices, spearmint leaves, licorice bites, etc. Typically all the starches used in jelly confectionery are the amylose-containing varieties. The higher the amylose content in the starch, the stronger the resulting gel; as you would expect, the high amylose corn starches form much stronger and much more rapidly setting gels versus starches containing less amylose.

When the starch has gelatanized the confectionery product is cooled and transferred to a mixer where the remaining ingredients are added (gelatin, fat, emulsifiers, acid, flavors, etc.) and mixed until the desired density or texture is reached. The texture of the candy can be altered by whipping air into it rather than pulling it if a lighter texture is desired. A foaming agent can also be used to add texture to a traditional chewy confectionery product. The chewy confectionery product is then rolled and cut into the desired shapes and sizes. The cut candy can then be packaged into appropriate packaging for distribution.

Typically when gelatin is used as the texturizing agent water, glucose syrup and sucrose are first cooked together and then combined with a hydrated gelatin to achieve a mixture containing the desired moisture target of the final chewy confectionery product. When using the gelatin, there are temperature and time limitations with regards to exposure to high heat. Gelatin must be added at either a low heat or it can be added quickly at high heat (so the gelatin is not exposed to the high heat for a long period of time) so as to not degrade or foul the gelatin. Starch and other previously mentioned commonly used ingredients in chewy confectionery products can further be added to the mixture to achieve the desired texture, color, and taste and then the mixture is poured into molds to form while cooling.

Typically when egg white is used as the as a texturizing agent a fresh, pasteurized or rehydrated egg white is beaten into a foam with or without other ingredients. The foam is then set by cooking or by combining it with a hot carbohydrate syrup. Other commonly used chewy confectionery product ingredients can then be further added to the mixture.

As mentioned, besides being used as the sole gelling agent in traditional chewy confectionery products, some starches can also be used to partially replace/complement gelatin in gummy-type candies where a softer, less chewy/ less elastic texture is desired or to as texturizing agent.

Starch can also be used to replace or complement more expensive and/or harder-to-source ingredients such as gelatin or gum arabic. Starch can help to modify the chew characteristics of the candy (i.e. increasing the structure/body, softness, chewiness, and elasticity of the candy while reducing "toothstick"). Starch has also been found to help inhibit sugar recrystallization and reduce cold flow in traditional chewy confectionery products.

Cold flow is a common problem with traditional chewy confectionery products. "Cold flow" is defined as the distortion, deformation, or dimensional change which takes place in a material under ambient conditions and pressures with an inability to return to its original dimensions. When products cold flow the shape of the product deforms causing inconsistent and distorted looking products which may not be very desirable by consumers. Often times cold flow becomes a problem during storage. Stickiness can also be a big problem for traditional confectionery products causing products to stick or clump together in the packaging.

Each traditional texturizing agent has its own advantages. One of the advantages of using starch as the texturizing agent in such products is that it allows one to control the viscosity of the substance during production, which helps with control of subsequent cold flow during storage. The advantage of using gelatin as the texturizing agent in chewy confectionery products is that the gelatin gives the candy a distinctive chewy texture that ranges from soft to very firm depending on the amount of gelatin used. Using egg white as the texturizing agent helps stabilize incorporated air thus keeping air bubbles from collapsing - this gives the product a light and airy texture.

As previously mentioned use of egg white and gelatin as texturizing agents is not desirable in the confectionery industry as both are animal derived ingredients. Additionally, since gelatin and egg white are proteins they are sensitive to temperature and/or acid which may cause them to degrade or foul. Use of starch, on the other hand, eliminates the use of animal products in the chewy confectionery product, but it tends to have a low gelling tendency and is not as useful alone in creating the ideal chewy texture in a chewy confectionery product thus gelatin is most often added to achieve the desired chew characteristics and texture. Gelatin tends to add a bouncy, rubbery texture.

It is, therefore, desirable to create a chewy confectionery product that excludes traditional texturizing agents but retains the texture and properties attributed to traditional texturizing agents which are desired by the consumer while reducing cold flow and stickiness. In particular, it is desirable to provide a chewy confectionery product which has a long-lasting cohesive chew acceptable to the consumer without the use of starch or animal products, such as gelatin and egg white.

### Summary of the Invention

This invention is directed to a novel chewy confectionery product which eliminates the need for traditional texturizing agents in the product formulation. The product of the current invention contains pectin and has a low water content compared to traditional chewy confectionery products. The chewy confectionary product of the current invention forms a consumer desirable commercial product without the need for animal derived components, such as gelatin and egg white, and thus all the disadvantages associated with them. The product of the present invention also improves problems with cold flow and stickiness that are associated with traditional chewy confectionery products and provides the consumer with a cleaner-breaking bite. By reducing cold flow the present invention allows for better looking and more consistently shaped products. By producing a less sticky chewy confectionery product there are fewer problems with the product pieces sticking together and sticking to a consumer's teeth. These improved physical properties of the chewy confectionery product of the current invention over traditionally chewy confectionery products also have additional advantages, for example the elimination of packaging for individual pieces of chewy confectionery product and reduction in processing difficulties.

An additional advantage of the current invention is that the formulation of the chewy confectionery product provides a chewy confectionery product which may be more desirable to consumers than a similar traditional chewy confectionery product containing traditional texturizing agents. The product of the current invention provides a softer chew and mouthfeel than traditional texturizing agent based chewy confectionery products. These characteristics may provide consumers with a more acceptable and desirable chewy confectionery product.

The present invention is defined by the claims. The present invention relates to a chewy confectionery product which is substantially free of the texturizing agents gelatin, starch and egg white (albumin); the chewy confectionery comprising pectin at a minimum of 0.2 percent by weight on a dry basis of the chewy confectionery product; sweetener comprising sucrose wherein said chewy confectionery product comprises 20 to 80 percent by weight of sucrose on a dry basis; and wherein said chewy confectionery product has a water content of 3 to 13 percent. The chewy confectionery product of the present invention can comprise an additional sweetener. The sweetener may include, but is not limited to, any of a number of carbohydrates and sugar substitutes commonly found in confectionery products. Examples include the various sugars (for example monosaccharides such as glucose (dextrose), fructose and galactose, and their polymers and disaccharides such as maltose, lactose, and their polymers, etc.), the various types of glucose syrups (corn syrup, rice syrup, high maltose syrup, high fructose syrup, etc.), sugar alcohols (polyols) or other sugar substitutes, high intensity sweeteners, and natural or artificial sweeteners and combinations thereof. The sweetener may be added to the product of the current invention in the amount of 10 to 99.8% percent by weight on a dry basis of the chewy confectionery. Fat may also be added to the product of the current invention in the amount of 0.5 to 25 percent by weight on a dry basis of the chewy confectionery product.

The chewy confectionery product may also include one or more additional ingredients traditionally used in the confectionery industry - these include but are not limited to other hydrocolloids (such as gum Arabic, xanthine gum, locust bean gum, gellan gum, carrageenan, and gum Arabic), acidulants, sensates, buffering agents, humectants, artificial and natural sweeteners, sugar alcohols, emulsifiers, flavor enhancers, proteins, artificial and natural flavors, essential oils, fruit juices, vegetable juices, colorings, and other commonly used confectionery ingredients. The chewy confectionery product may also include vitamins, supplements, dairy (such as evaporated milk, concentrated milk, dry milk, whey, butter, cream, yogurt, buttermilk, etc.), fiber, nuts, cereal or other similar food ingredients.

The chewy confectionery product of the current invention is defined as the chewy base portion only and does not include layers which are made of different confectionery products, coatings, center fillings or added non-confectionery ingredients such as grains, nuts, cereals, supplements, vitamins, etc. The chewy confectionery product of the present invention may, however, be layered, coated, center-filled or have other non-confectionery ingredients added to it. The product may be center filled with a liquid, syrup, or powder. The coating can be a hard or soft coating. The chewy confectionery product can also be glazed or polished with food approved substances such as shellac. The chewy confectionery product can also be layered with chocolate or any other confectionery or food product including traditional chewy confectionery products. Additionally if the use of traditional texturizing agents is desirable a traditional texturizing agent may also be added to the chewy confectionery product of the present invention.

The use of pectin at a low moisture level in combination with the sweetener and other ingredients described in the present invention helps eliminate the need for traditional texturizing agents while maintaining the quality, texture and consistency of chewy confectionery products made with these traditional texturizing agents. In fact, the chewy product of the current invention has a texture which could be more desirable by consumers than that of traditional chewy confectionery products. The chewy product of the current invention also has reduced stickiness, cleaner-breaking bite, and significantly reduced cold-flow properties when compared to a traditional chewy confectionery product.

### Description of the Invention

The present invention provides a chewy confectionery product having a low water content which is produced without the use of traditional texturizing agents. It has surprisingly been found that the use of pectin in a chewy confectionery product, without the use of traditional texturizing agents, can achieve a consistency and texture similar to, and in fact more well-liked and desirable than, that of traditional chewy confectionery products while eliminating the need for animal based ingredients such as gelatin and egg white. The chewy confectionery product of the current invention also has some surprising advantages over traditional chewy confectionery products - these include reduced cold flow and stickiness and a cleaner-breaking bite.

The chewy confectionery product of the current invention uses pectin to form a similar chewy confectionery product texture as that formed using a traditional texturizing agent. Pectin is a heterogeneous grouping of acidic structural polysaccharides found in fruit and vegetables and mainly prepared from 'waste' citrus peel and apple pomace. Pectin is produced commercially as a white to light brown powder and is used in food as a gelling agent.

The chewy confectionery product of the present invention contains pectin at a minimum amount of 0.2 percent by weight on a dry basis of the chewy confectionery product. The chewy confectionery product has a water content between 3 and 13 percent by weight of the chewy confectionery product, more preferably between 5 and 9 percent by weight of the chewy confectionery product, and most preferably between 6 and 8 percent by weight of the chewy confectionery product.

According to one embodiment of the present invention the chewy confectionery product is comprised of pectin and a sweetener. The sweetener may include, but is not limited to, any of a number of carbohydrates or sugar substitutes commonly found in confectionery products. Examples include the various sugars (for example monosaccharides such as glucose (dextrose), fructose and galactose and their polymers and disaccharides such as sucrose, maltose, lactose, and their polymers, etc.), the various types of glucose syrups (corn syrup, rice syrup, high maltose syrup, high fructose syrup, etc.), sugar alcohols (polyols) or other sugar substitutes, high intensity sweetener, natural or artificial sweetener, and combinations thereof. In one embodiment of the present invention the sweetener may include a crystallizing sweetener and a non-crystallizing sweetener. In one embodiment of the present invention the sweetener is a combination of sucrose and a glucose syrup. The sweetener may be present in the amount of 10 to 99.8 percent by weight on a dry basis of the chewy confectionery product, more preferably 70 to 99 percent by weight on a dry basis of the chewy confectionery product, and most preferably 80 to 95 percent by weight on a dry basis of the chewy confectionery product. In one embodiment of the present invention, where sucrose and a glucose syrup are being used as the sweetener, the sucrose is present in the amount of 20 to 80 percent by weight on a dry basis of the chewy confectionery product, more preferably 50 to 70 percent by weight on a dry basis of the chewy confectionery product, and most preferably 60 to 65 percent by weight on a dry basis of the chewy confectionery product.

In another embodiment of the present invention the chewy confectionery product further contains fat. The fat may include, but is not limited to, any of a number of fats commonly used in confectionery products. Examples of such fats include but are not limited to dairy fats, modified and unmodified palm oil, palm kernel oil, coconut oil, soybean oil, and cottonseed oil. Fat may be added to the chewy confectionery product in the amount of 0.5 to 20 percent by weight on a dry basis of the chewy confectionery product, more preferably 2 to 8 percent by weight on a dry basis of the chewy confectionery, and most preferably 3 to 7 percent by weight on a dry basis of the chewy confectionery product.

In another embodiment of the present invention the chewy confectionery product may also include one or more additional ingredients traditionally used in the confectionery industry - these include but are not limited to other hydrocolloids (such as gum Arabic, xanthine gum, locust bean gum, gellan gum, carrageenan, and gum Arabic), acidulants, sensates, buffering agents, humectants, artificial and natural sweeteners, sugar alcohols, emulsifiers, flavor enhancers, proteins, artificial and natural flavors, essential oils, fruit juices, vegetable juices, colorings, and other commonly used confectionery ingredients. In another embodiment of the present invention vitamins, supplements, dairy (such as evaporated milk, concentrated milk, dry milk, whey, butter, cream, yogurt, buttermilk, etc.), fiber, nuts, or other similar ingredients can also be added to the chewy confectionery product.

The chewy confectionery product is substantially free of traditional texturizing agents. "Substantially free" is intended to mean that the product has no intentional addition of gelatin, starch, or egg white or that the amount of gelatin, starch, or egg white does not contribute to the chewy consistency of the product.

In an embodiment of the present invention the chewy confectionery product may be center-filled with a liquid, syrup, or powder. Such center filling may contain vitamins, supplements, nutritional ingredients, minerals, herbal extracts, oligosaccharides and the like. Such center filling could also include chocolate and other forms of confectionery and food products. In another embodiment of the present invention the chewy confectionery product can be coated. The coating can be a hard or soft coating. The coating may be comprised of sucrose-based ingredients, dextrose-based ingredients, sucrose-free ingredients, sugar alcohol ingredients, or combinations thereof. The coating can also be comprised of chocolate or other dairy or non-dairy fat based food approved ingredients. The chewy confectionery product can also be glazed or polished with food approved substances such as shellac. In another embodiment of the current invention the chewy confectionery product can be layered with chocolate or any other confectionery or food product.

The chewy confectionery product of the present invention can be produced using any of several processes common to creating chewy confectionery products. An example of a typical process for creating a chewy confectionery product similar to that of the present invention entails mixing together and cooking the sweetener with water. Pectin is then mixed into the sweetener mixture. The pectin can be added pre or post-cooking. If added after cooking it may be pre-hydrated to improve its functionality. If adding fat the fat component can be mixed in after the pectin is added or before it is added. Depending on the equipment being used, the fat component may be added at any stage of the production process and not just immediately after or before the pectin is added. Flavor, color, acid, and other confectionery ingredients could be mixed in at the very end to prevent degradation. The product may or may not be grained. It is then cooled, extruded, and further cooled before the pieces are scored, broken up, and then wrapped if necessary. In various other embodiments the product can be molded or deposited. As previously mentioned, the chewy confectionery product of the current invention does not need individual wrapping due to its physical properties which prevent the individual pieces of product from sticking together in a package.

In accordance with various embodiments of the current invention the chewy confectionery product may be aerated during processing or formation. The chewy confectionery product may be aerated by pulling, whipping air into the product, incorporating foaming agents, or using other aerating methods depending on the final desired texture of the product. As previously stated in various embodiments of the present invention the chewy confectionery product may be center-filled with a liquid, syrup, or powder during processing. In various embodiment of the present invention the chewy confectionery product can also be coated or polished/glazed once it is formed. As previously stated, in various other embodiments of the current invention the chewy confectionery product can be layered with chocolate or any other confectionery or food product. The layered product can be formed/processed using traditional methods of layering confectionery products such as extrusion, compression, molding, depositing, etc.

### COMPARATIVE EXAMPLES

The following comparative examples are provided to illustrate the advantages of the current invention over traditional chewy confectionery products. These examples compare the movement or cold flow of samples of traditional chewy confectionery products to the chewy confectionery product of the current invention. One of the major advantages of the present invention is the reduction in movement and cold flow compared to traditional chewy confectionery products and this can be seen from the examples.

Samples of identical chewy confectionery products having identical water contents were prepared using different texturizing agents - one with starch, one with gelatin, and one with pectin. The samples were prepared by combining the same cooked syrup with different hydrated texturizing agent blends. The cooked syrup was prepared by mixing 5.8% fat, 0.06% emulsifier, 43.5% sucrose, and 50.67% corn syrup and cooking the mixture to a temperature of 260°F. The cooked syrup was then combined with three different texturizing agent blends, each texturizing blend having the same water content. The texturizing blends were made of pectin, starch, or gelatin combined with sucrose and water to achieve the desired water content. The final composition of the samples was about 5.5% fat, 0.05% emulsifier, 43.4% sucrose, 38.5% corn syrup solids, 0.79% texturizing agent (comprised of either pectin, starch or gelatin), and 11.8% water. During the preparation process some of the water was cooked off in each sample thus lowering the water content of the final products.

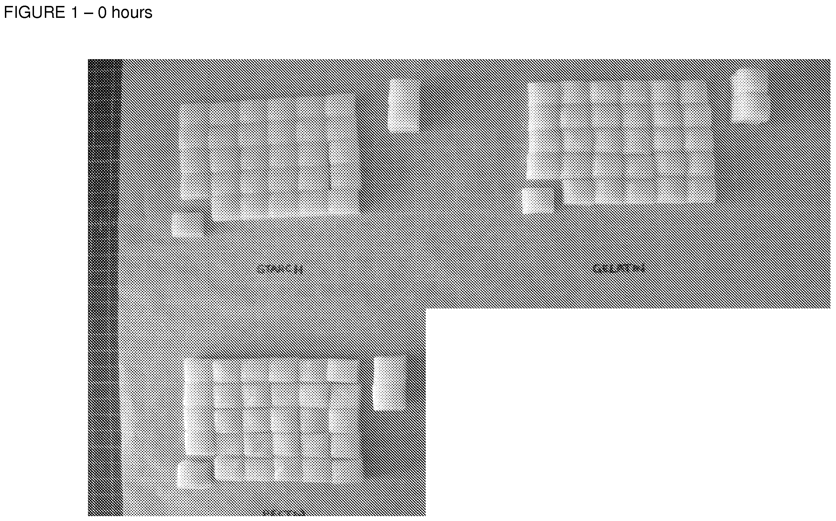

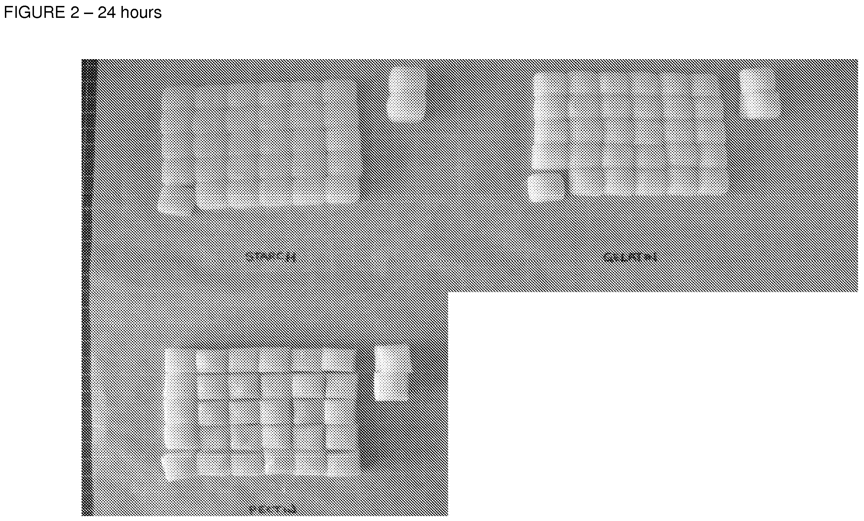

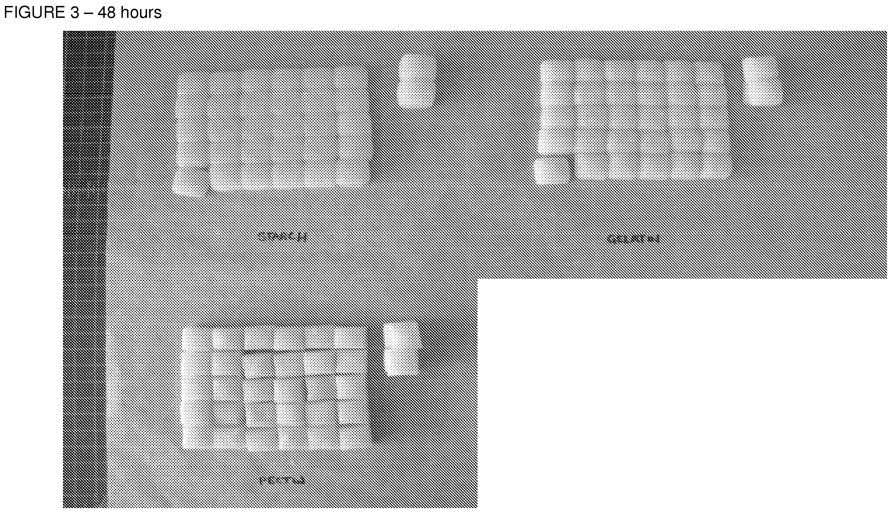

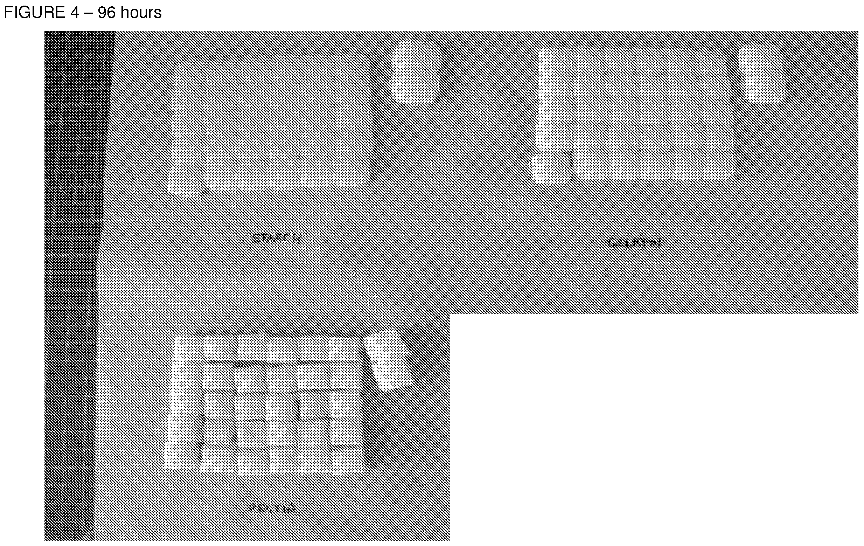

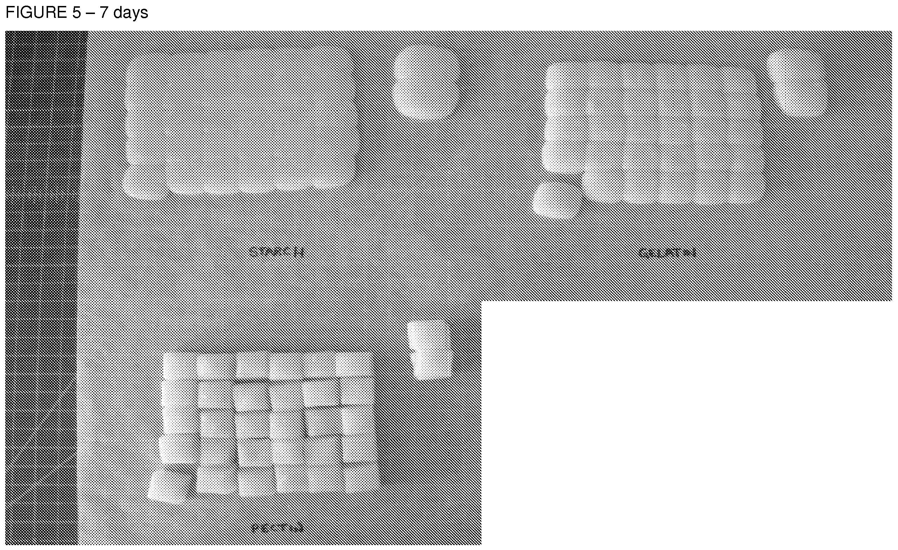

The samples of the different chewy confectionery products were then set at ambient conditions and analyzed for movement and cold flow over time. Figure 1 shows the samples immediately after preparation. Figure 2 shows the samples 24 hours after preparation. Figure 3 shows the samples 48 hours after preparation. Figure 4 shows the samples 96 hours after preparation. Figure 5 shows the samples 7 days after preparation. The samples were analyzed for amount of movement and cold flow. As seen in the figures, over a 7-day period there was no movement or cold-flow seen in the pectin based samples while the amount of movement and cold flow of the starch and gelatin samples was substantial.

## Claims

1. A chewy confectionery product which is substantially free of the texturizing agents gelatin, starch and egg white (albumin);
the chewy confectionery comprising pectin at a minimum of 0.2 percent by weight on a dry basis of the chewy confectionery product;
sweetener comprising sucrose wherein said chewy confectionery product comprises 20 to 80 percent by weight of sucrose on a dry basis; and
wherein said chewy confectionery product has a water content of 3 to 13 percent.

2. The chewy confectionery product of Claim 1 comprising 5 to 9 percent water.

3. The chewy confectionery product of Claim 1 additionally comprising fat.

4. The chewy confectionery product of Claim 1 wherein sweetener is present from 10 to 99.8% percent by weight on a dry basis of the chewy confectionery product, more preferably 70 to 99 percent by weight on a dry basis of the chewy confectionery product, and most preferably 80 to 95 percent by weight on a dry basis of the chewy confectionery product.

5. The chewy confectionery product of Claim 3 wherein the fat is present at a level of 2 to 8 percent by weight on a dry basis of the chewy confectionery product.

6. The chewy confectionery product of Claim 1 wherein the sweetener is a combination of sucrose and a glucose syrup.

7. The chewy confectionery product of Claim 6 wherein the sucrose is present from 50 to 70 percent by weight on a dry basis of the chewy confectionery product, especially 60 to 65 wt.%.

8. A chewy confectionery product according to claim 1 comprising fat from 3 to 7 percent by weight on a dry basis of the chewy confectionery product, sweetener from 80 to 95 percent by weight on a dry basis of the chewy confectionery product, and pectin at a minimum of 0.2 percent by weight on a dry basis of the chewy confectionery product, such chewy confectionery product having a water content of 6 to 8 percent.

9. The chewy confectionery product of any of the preceding claims which is aerated.

10. The chewy confectionery product of any of the preceding claims which contains a center filling.

11. The chewy confectionery product of any of the preceding claims additionally comprising a coating.

12. The chewy confectionery product of Claim 11 wherein the coating comprises dextrose-based ingredients, sucrose-based ingredients, sucrose-free ingredients, sugar alcohols, fat based ingredients, and combinations thereof.

13. The chewy confectionery product of any of claims 1 to 12 comprising 6 to 8 percent water.

14. The chewy confectionery product of any of claims 1 to 13 comprising 3 to 7 percent by weight fat on a dry basis of the chewy confectionery product.

15. The chewy confectionery product of any preceding claim wherein the chewy confectionery product is layered with a confectionery or food product, such as a traditional chewy confectionery product.

## Patentansprüche

1. Zähes Süßwarenprodukt, das im Wesentlichen frei von den Texturierungsmitteln Gelatine, Stärke und Eiweiß (Albumin) ist;
wobei das zähe Süßwarenprodukt Pektin in einer Menge von mindestens 0,2 Gewichtsprozent auf einer Trockenbasis des zähen Süßwarenprodukts umfasst,
Süßungsmittel, umfassend Saccharose, wobei das zähe Süßwarenprodukt 20 bis 80 Gewichtprozent Saccharose auf einer Trockenbasis umfasst; und
wobei das zähe Süßwarenprodukt einen Wassergehalt von 3 bis 13 Prozent aufweist.

2. Zähes Süßwarenprodukt nach Anspruch 1, umfassend 5 bis 9 Prozent Wasser.

3. Zähes Süßwarenprodukt nach Anspruch 1, zusätzlich Fett umfassend.

4. Zähes Süßwarenprodukt nach Anspruch 1, wobei Süßungsmittel zu 10 bis 99,8 Gew.-% auf einer Trockenbasis des zähen Süßwarenprodukts vorliegt, bevorzugter zu 70 bis 99 Gewichtsprozent auf einer Trockenbasis des zähen Süßwarenprodukts und besonders bevorzugt zu 80 bis 95 Gewichtsprozent auf einer Trockenbasis des zähen Süßwarenprodukts.

5. Zähes Süßwarenprodukt nach Anspruch 3, wobei das Fett zu einer Höhe von 2 bis 8 Gewichtsprozent auf einer Trockenbasis des zähen Süßwarenprodukts vorliegt.

6. Zähes Süßwarenprodukt nach Anspruch 1, wobei das Süßungsmittel eine Kombination aus Saccharose und einem Glucosesirup ist.

7. Zähes Süßwarenprodukt nach Anspruch 6, wobei die Saccharose zu 50 bis 70 Gewichtsprozent auf einer Trockenbasis des zähen Süßwarenprodukts, insbesondere zu 60 bis 65 Gew.-%, vorliegt.

8. Zähes Süßwarenprodukt nach Anspruch 1, umfassend von 3 bis 7 Gewichtsprozent Fett auf einer Trockenbasis des zähen Süßwarenprodukts, von 80 bis 95 Gewichtsprozent Süßungsmittel auf einer Trockenbasis des zähen Süßwarenprodukts und mindestens 0,2 Gewichtsprozent Pektin auf einer Trockenbasis des zähen Süßwarenprodukts, wobei ein solches zähes Süßwarenprodukt einen Wassergehalt von 6 bis 8 Prozent aufweist.

9. Zähes Süßwarenprodukt nach einem der voranstehenden Ansprüche, das mit Luft durchsetzt ist.

10. Zähes Süßwarenprodukt nach einem der voranstehenden Ansprüche, das eine zentrale Füllung enthält.

11. Zähes Süßwarenprodukt nach einem der voranstehenden Ansprüche, zusätzlich einen Überzug umfassend.

12. Zähes Süßwarenprodukt nach Anspruch 11, wobei der Überzug Inhaltsstoffe auf Dextrosebasis, Inhaltsstoffe auf Saccharosebasis, saccharosefreie Inhaltsstoffe, Zuckeralkohole, Inhaltsstoffe auf Fettbasis und Kombinationen dieser umfasst.

13. Zähes Süßwarenprodukt nach einem der Ansprüche 1 bis 12, umfassend 6 bis 8 Prozent Wasser.

14. Zähes Süßwarenprodukt nach einem der Ansprüche 1 bis 13, umfassend 3 bis 7 Gewichtsprozent Fett auf einer Trockenbasis des zähen Süßwarenprodukts.

15. Zähes Süßwarenprodukt nach einem der voranstehenden Ansprüche, wobei das zähe Süßwarenprodukt mit einem Süßwaren- oder Lebensmittelprodukt geschichtet ist, so wie ein herkömmliches zähes Süßwarenprodukt.

## Revendications

1. Produit de confiserie tendre qui est sensiblement exempt des agents de texture de gélatine, amidon et blanc d'œuf (albumine) ;
la confiserie tendre comprenant de la pectine à un minimum de 0,2 pour cent en poids sur une base sèche du produit de confiserie tendre ;
un édulcorant comprenant du sucrose dans lequel ledit produit de confiserie tendre comprend de 20 à 80 pour cent en poids de sucrose sur une base sèche ; et
dans lequel ledit produit de confiserie tendre a une teneur en eau de 3 à 13 pour cent.

2. Produit de confiserie tendre selon la revendication 1 comprenant de 5 à 9 pour cent d'eau.

3. Produit de confiserie tendre selon la revendication 1 comprenant en outre de la matière grasse.

4. Produit de confiserie tendre selon la revendication 1 dans lequel l'édulcorant est présent à raison de 10 à 99,8 pour cent en poids sur une base sèche du produit de confiserie tendre, de manière davantage préférée de 70 à 99 pour cent en poids sur une base sèche du produit de confiserie tendre, et de manière préférée entre toutes de 80 à 95 pour cent en poids sur une base sèche du produit de confiserie tendre.

5. Produit de confiserie tendre selon la revendication 3 dans lequel la matière grasse est présente à un niveau de 2 à 8 pour cent en poids sur une base sèche du produit de confiserie tendre.

6. Produit de confiserie tendre selon la revendication 1 dans lequel l'édulcorant est une combinaison de sucrose et d'un sirop de glucose.

7. Produit de confiserie tendre selon la revendication 6 dans lequel le sucrose est présent à raison de 50 à 70 pour cent en poids sur une base sèche du produit de confiserie tendre, en particulier de 60 à 65 % en poids.

8. Produit de confiserie tendre selon la revendication 1 comprenant de la matière grasse à raison de 3 à 7 pour cent en poids sur une base sèche du produit de confiserie tendre, un édulcorant à raison de 80 à 95 pour cent en poids sur une base sèche du produit de confiserie tendre, et de la pectine à un minimum de 0,2 pour cent en poids sur une base sèche du produit de confiserie tendre, un tel produit de confiserie tendre ayant une teneur en eau de 6 à 8 pour cent.

9. Produit de confiserie tendre selon l'une quelconque des revendications précédentes qui est aéré.

10. Produit de confiserie tendre selon l'une quelconque des revendications précédentes qui contient une garniture centrale.

11. Produit de confiserie tendre selon l'une quelconque des revendications précédentes comprenant en outre un enrobage.

12. Produit de confiserie tendre selon la revendication 11 dans lequel l'enrobage comprend des ingrédients à base de dextrose, des ingrédients à base de sucrose, des ingrédients exempts de sucrose, des alcools glucidiques, des ingrédients à base de matière grasse, et des combinaisons de ceux-ci.

13. Produit de confiserie tendre selon l'une quelconque des revendications 1 à 12 comprenant de 6 à 8 pour cent d'eau.

14. Produit de confiserie tendre selon l'une quelconque des revendications 1 à 13 comprenant de 3 à 7 pour cent en poids de matière grasse sur une base sèche du produit de confiserie tendre.

15. Produit de confiserie tendre selon l'une quelconque des revendications précédentes dans lequel le produit de confiserie tendre est agencé en couches avec un produit de confiserie ou alimentaire, tel qu'un produit de confiserie tendre traditionnel.
